# EUROPEAN PATENT APPLICATION

(11) **EP 3 121 971 A1**
(43) Date of publication of application: **25.01.2017**
(21) Application number: 16170181.8
(22) Date of filing: 18.05.2016
(51) Int. Cl.: H04B 5/02, F03D 17/00

(54) **WIND POWER GENERATION APPARATUS AND WIRELESS COMMUNICATION METHOD IN WIND POWER GENERATION APPARATUS**

(30) Priority: 22.07.2015 JP 2015144927
(71) Applicant: Hitachi, Ltd., Tokyo 100-8280 (JP)
(72) Inventor: NOMA, Tatsuji, Tokyo, 100-8280 (JP); KOMIYA, Yasumaro, Tokyo, 100-8280 (JP); NODA, Masaki, Tokyo, 100-8280 (JP); SHIROSUGI, Takatoshi, Tokyo, 100-8280 (JP)
(74) Representative: MERH-IP Matias Erny Reichl Hoffmann Patentanwälte PartG mbB

(57) **Abstract**

Electric wave interference between a plurality of wireless communications between sensor nodes and a sink node is reduced. A wind power generation apparatus has a nacelle 108 having a first antenna with a first radiation pattern, and a sink node 104 including a first transmitting/receiving unit 1041 transmitting a beacon via the first antenna and receiving first sensor data and second sensor data, a first blade 101 having a first sensor node including a second transmitting/receiving unit transmitting the first sensor data via a second antenna in response to reception of the beacon via the second antenna and rotated by a rotor connected to the nacelle, and a second blade 102 having a second sensor node including a third transmitting/receiving unit transmitting the second sensor data via a third antenna in response to reception of the beacon via the third antenna and rotated by the rotor 110, in which one of the second antenna and the third antenna is located within the range of a predetermined angle less than a half-power angle of the first radiation pattern, and the other is located outside the range of the half-power angle.

## Description

### TECHNICAL FIELD

The present invention relates to a wind power generation apparatus having a wireless sensor network and to a wireless communication method in the wind power generation apparatus.

### BACKGROUND ART

A wind power generation apparatus using a wireless technique is disclosed in Japanese Unexamined Patent Application Publication No. 2013-231409. Japanese Unexamined Patent Application Publication No. 2013-231409 describes that "The wind power generation apparatus according to this embodiment may wirelessly transmit at least one of the signal transmitted from the strain gauge to the vibration calculating unit and the signal transmitted from the noise sensor to the vibration state adjusting unit. Thus, by using the wireless technique, the large wind power generation apparatus can easily configure the sensor network".

### SUMMARY OF INVENTION

The wind power generation apparatus has a plurality of blades, and a plurality of sensors on the blades for grasping the states of the blades, and uses wireless communication to transmit and receive sensor data between the sensors and a transmitting/receiving device in a nacelle.

A plurality of sensor nodes including the sensors on the blades use the same frequency bandwidth (channel) for wireless communication between the sensors and the transmitting/receiving device in the nacelle. This is because, when the sensor nodes use different frequency bandwidths, it is necessary to adjust the filter of each sensor node in each frequency bandwidth. In addition, for effective use of frequency, it is difficult to use different frequency bandwidths for the blades of one wind power generation apparatus. Electric waves in the same frequency bandwidth used for a plurality of different wireless communications cause interference therebetween. Japanese Unexamined Patent Application Publication No. 2013-231409 does not reflect electric wave interference in the wireless sensor network.

In such a state, electric wave interference occurs between a plurality of wireless communications between the senor nodes including the sensors on the blades of the wind power generation apparatus and the sink node including the transmitting/receiving device in the nacelle thereof.

The disclosed wind power generation apparatus has a nacelle having a first antenna with a first radiation pattern and a sink node including a first
transmitting/receiving unit transmitting a beacon via the first antenna and receiving first sensor data and second sensor data via the first antenna, a first blade having a first sensor node including a second
transmitting/receiving unit transmitting the first sensor data via a second antenna in response to reception of the beacon via the second antenna and rotated by a rotor connected to the nacelle, and a second blade having a second sensor node including a third
transmitting/receiving unit transmitting the second sensor data via a third antenna in response to reception of the beacon via the third antenna and rotated by the rotor, in which one of the second antenna and the third antenna is located within the range of a predetermined angle less than a half-power angle of the first radiation pattern, and the other is located outside the range of the half-power angle.

According to the wind power generation apparatus disclosed, it is possible to reduce occurrence of electric wave interference between a plurality of wireless communications between the sensor nodes on the blades of the wind power generation apparatus and the sink node in the nacelle thereof.

### BRIEF DESCRIPTION OF DRAWINGS

Fig. 1 is a front view of a configuration example of a wind power generation apparatus;
Fig. 2 is a side view of a configuration example of the wind power generation apparatus;
Fig. 3 illustrates a configuration example of a wireless sensor network system;
Fig. 4 illustrates a configuration example of a sensor node;
Fig. 5 is a diagram of a wireless communication sequence between a sink node and sensor nodes of an example; and
Fig. 6 is a configuration example of part of the wind power generation apparatus.

### DESCRIPTION OF EMBODIMENTS

When wireless communication in the same frequency bandwidth is used between sensor nodes including sensors on a plurality of blades of a wind power generation apparatus and a sink node including a
transmitting/receiving device in a nacelle thereof, the sink node receives radio waves from the sensor nodes at the same time, resulting in electric wave interference between wireless communications of the sink node and the sensor nodes on the blades. When the sink node can be prevented from spatially receiving the radio waves from the sensor nodes at the same time, the electric wave interference does not occur.

### First Embodiment

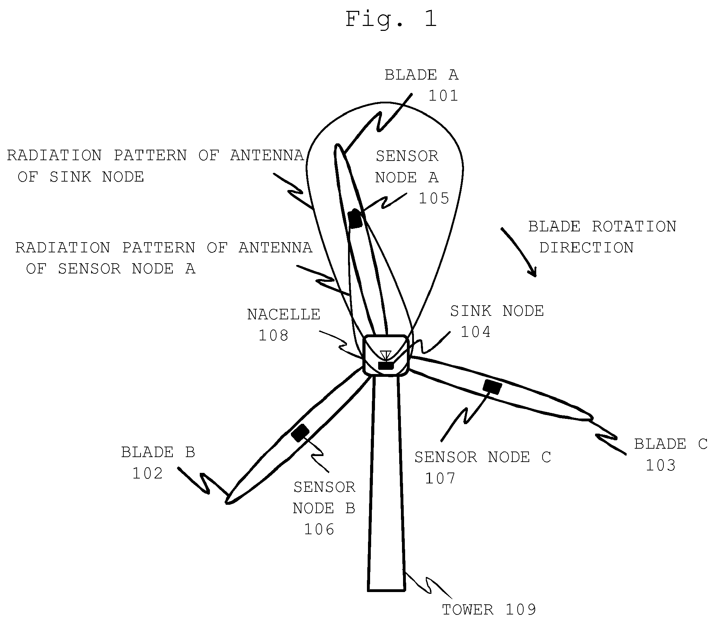

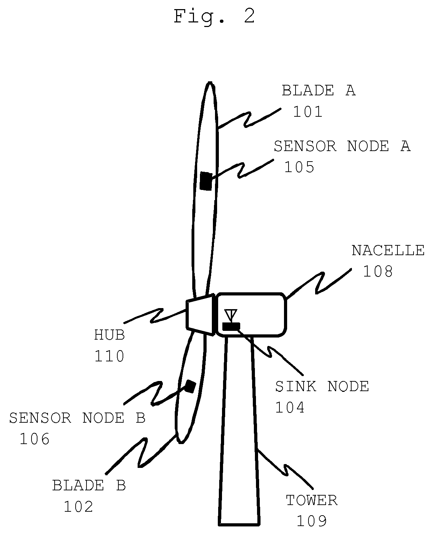

Fig. 1 is a front view of a configuration example of a wind power generation apparatus, with the rotational surfaces of blades thereof seen from the front. Fig. 2 is a side view of a configuration example of the wind power generation apparatus in Fig. 1.

The wind power generation apparatus has a blade A 101, a blade B 102, and a blade C 103, a nacelle 108, a tower 109, and a hub 110. Although the configuration example in Fig. 1 illustrates three blades, the wind power generation apparatus may have one blade. From the dynamic balance, the wind power generation apparatus typically has two or more blades.

The hub 110 is a rotating unit, called a rotor, at which the blades A 101 to C 103 are fixed at intervals of 120°. The blades A 101 to C 103 receive wind to rotate in the blade rotation direction illustrated in Fig. 1. Then, the rotational shaft of the hub 110 rotates to transmit rotation motion to an electric generator via a speed changer connected to the rotational shaft, thereby generating electric power. The rotational shaft of the hub 110 is fixed to the nacelle 108 through a bearing. The speed changer and the electric generator are incorporated in the nacelle 108.

The wind power generation apparatus has, on the blades A 101 to C 103, sensor nodes A 105 to C 107 having sensors that measure the strained state of the blades. The sensors are e.g., strain gauges. A sink node 104 in the nacelle 108 receives sensor data from the sensor nodes A 105 to C 107. The sensor nodes A 105 to C 107 and the sink node 104 configure a wireless sensor network.

The sink node 104 and the sensor nodes A 105 to C 107 each have a directional antenna with a radiation pattern, as illustrated in Fig. 1. Although not illustrated, the antenna of the sink node 104 has a half-power angle α, and the antennas of the sensor nodes A 105 to C 107 have a half-power angle β.

Communication between the sink node 104 and the sensor nodes A 105 to C 107 is enabled when the antennas of the sensor nodes A 105 to C 107 are within the range of the radiation pattern of the antenna of the sink node 104, and the antenna of the sink node 104 is within the ranges of the radiation patterns of the antennas of the sensor nodes A 105 to C 107. The sensor nodes A 105 to C 107 have the same frequency bandwidth for use in wireless communication.

The sink node 104 in the nacelle 108, as a fixed portion, does not change the maximum radiated electric power direction in the radiation pattern of its antenna. When the sensor nodes A 105 to C 107 are respectively provided at the distal ends of the blades A 101 to C 103, the radiated electric power in the maximum radiated electric power direction of the antenna of the sink node 104 satisfies the receiving sensitivities of the sensor nodes A 105 to C 107.

When the sensor nodes A 105 to C 107 are respectively provided at the distal ends of the blades A 101 to C 103, the maximum radiated electric power directions of the radiation patterns of their antennas are the direction of the sink node 104, that is, the direction of the nacelle 108. The radiated electric powers in the maximum radiated electric power directions of the antennas of the sensor nodes A 105 to C 107 satisfy the receiving sensitivity of the sink node 104 (the sink node 104 can demodulate the signals at a predetermined signal-to-noise ratio or more). When the sensor nodes A 105 to C 107 are provided near the base ends of the blades A 101 to C 103 and close to the hub 110, the radiated electric power in the maximum radiated electric power direction of the antenna of each of the sensor nodes A 105 to C 107 enters into the radiated electric powers in the maximum radiated electric power directions of the antennas of the remaining sensor nodes. However, this does not affect the reception because the remaining sensor nodes can discriminate their transmission frequencies from the transmission frequency of the sink node 104.

The half-power angle α and the half-power angle β will now be described. The half-power angle α of the antenna of the sink node 104 is less than 360°/n when the number of blades of the wind power generation apparatus is n (as described above, n ≥ 2). For instance, when, as illustrated in Fig. 1, the number of blades is three, the half-power angle α is less than 120°. However, the half-power angle α, which is the calculation value, is difficult to prevent electric wave interference. The half-power angle α should thus be smaller than the calculation value. For instance, when the number of blades is three, the half-power angle α is a predetermined angle of 90°, not the calculation value less than 120°.

Since the maximum radiated electric power directions in the radiation patterns of the antennas of the sensor nodes A 105 to C 107 are the direction of the sink node 104, the half-power angle β is near 0°, and the antennas of the sensor nodes A 105 to C 107 are not required to have high directionality with a great manufacturing problem. On the contrary, the radio wave from the sensor node outside the radiation pattern of the sink node 104 or outside of the half-power angle is not received by the sink node 104. The antennas of the sensor nodes A 105 to C 107 may thus be non-directional antennas. That is, there is no limitation on the half-power angle β.

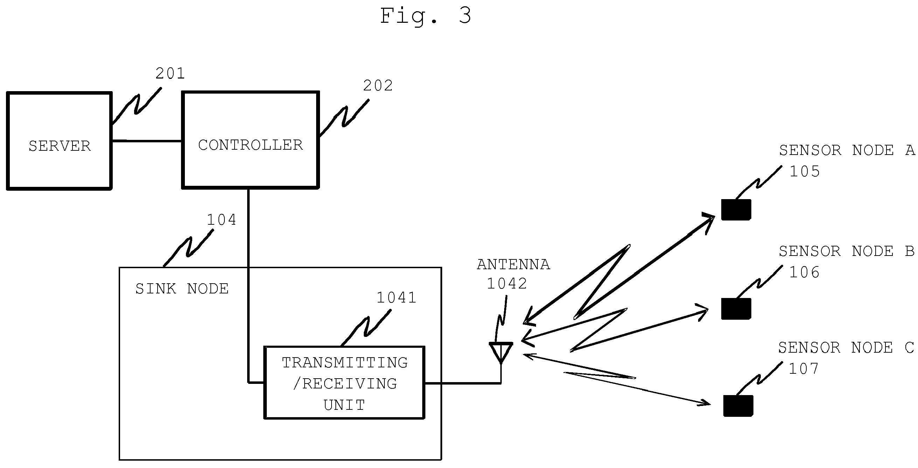

Fig. 3 illustrates a configuration example of a wireless sensor network system including the sink node 104 and the sensor nodes A 105 to C 107. The wireless sensor network system has a server 201 and a controller 202, in addition to the sink node 104 and the sensor nodes A 105 to C 107.

The server 201 collects sensor data from the sensor nodes A 105 to C 107 received by the sink node 104 via the controller 202. The server 201 may be provided in a place different from that of the wind power generation apparatus, and may correspond to a plurality of wind power generation apparatuses to collect sensor data thereof.

The controller 202 controls wireless communication between the sink node 104 and each of the sensor nodes A 105 to C 107, and outputs sensor data received by the sink node 104 to the server 201.

The sink node 104 is controlled by the controller 202, and has a transmitting/receiving unit 1041 and an antenna 1042 for wireless communication between the sink node 104 and the sensor nodes A 105 to C 107. As described above, the antenna 1042 is a directional antenna having the half-power angle α as the predetermined angle.

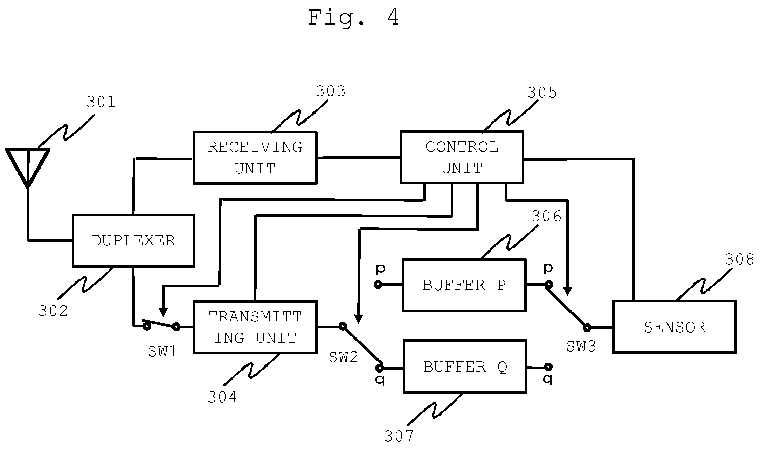

Fig. 4 illustrates a configuration example of the sensor node A 105. Only the sensor node A 105 will be described here, because the remaining sensor nodes have the same configuration. The sensor node A 105 has an antenna 301, a duplexer (branching filter) 302 that shares the antenna 301 between transmission and reception so as to separate a receiving wave from the antenna 301, from a transmitting wave to the antenna 301, a receiving unit 303 that is connected to the duplexer 302, detects reception of the receiving wave from the sink node 104, and outputs a sensing signal indicating the reception, a transmitting unit 304 that is connected to the duplexer 302 via an SW1 and outputs the transmitting wave carrying transmission data, a control unit 305 that is connected to the receiving unit 303, the transmitting unit 304, and a sensor 308 such as a strain gauge, and controls connection of the SW1 and an SW2, and alternating buffers P306 and Q307 connected to the transmitting unit 304 via the SW2 and connected to the sensor 308 via an SW3.

The transmitting wave from the transmitting unit 304 is radiated from the antenna 301 when the SW1 is turned on by the control unit 305 according to the signal sensing the receiving wave, and is not radiated when the SW1 is turned off. The SW2 and the SW3 are exclusively controlled by the control unit 305 in such a manner that when the SW2 is connected to p, the SW3 is connected to q, and that when the SW2 is connected to q, the SW3 is connected to p. Such exclusive control transmits, as transmission data, the contents of one of the buffers (sensor data), and stores sensor data from the sensor 308 into the other buffer.

The transmitting wave, which reaches the remaining sensor nodes, is separated by the duplexers 302 of the remaining sensor nodes so as not to affect the remaining sensor nodes. Thus, the SW1 is not necessarily required to be controlled. In addition, in the sensor network, which uses, for wireless communication, an electric wave at a frequency of several hundred MHz or more and with high straightness, the sensor node A 105 is less affected by sneaking of the electric waves from the remaining sensor nodes outside the half-power angle of the sink node 104, but the sink node 104 may receive a reflective wave according to the ambient environment of the wind power generation apparatus (a structure, such as other wind power generation apparatus, or a building). It is thus desirable that the sensor node when not detecting the receiving wave from the sink node 104 does not transmit the transmitting wave, and the SW1 is required to be controlled.

Sensor data is repeatedly stored into the buffer according to the output instruction from the control unit 305 to the sensor 308 and regardless of the time when transmission data is transmitted or the time for transmitting transmission data. The output instruction from the control unit 305 to the sensor 308 is outputted at intervals of e.g., 100 ms.

The blade of the wind power generation apparatus has a rotational speed of 10 to 50 rotations per minute according to model. To study the allowable transmission time of transmission data, the blade of the wind power generation apparatus has a higher rotational speed of 60 rotations per minute (one rotation per second). The half-power angle α of the antenna of the sink node 104 is the predetermined angle of 90°, and the maximum radiated electric power direction of the antenna of the sink node 104 is 0°, so that the antenna of the sink node 104 has a communicable angle within the range of -45° to +45°. Thus, the allowable communication time is 45° x 2/360°/one rotation per second = 250 ms. Sensor data from the sensor 308, which has the amount of data of 100 bytes/the number of outputs at intervals of 100 ms, has the amount of data of 1 kbyte for each rotation of the blade or for one second. When the amount of data of the header (the identifier of the sensor node) for transmitting sensor data at each rotation of the blade and the time for establishing and disconnecting the wireless line are allowed for, and assuming such an allowance to be equal to transmission of the amount of data 10 times the amount of data of 1 kbyte, 10 kbytes x 8/250 ms = 320 kbps. Such a communication speed is well over the recent high-speed wireless communication speed. Thus, the present invention can be easily achieved.

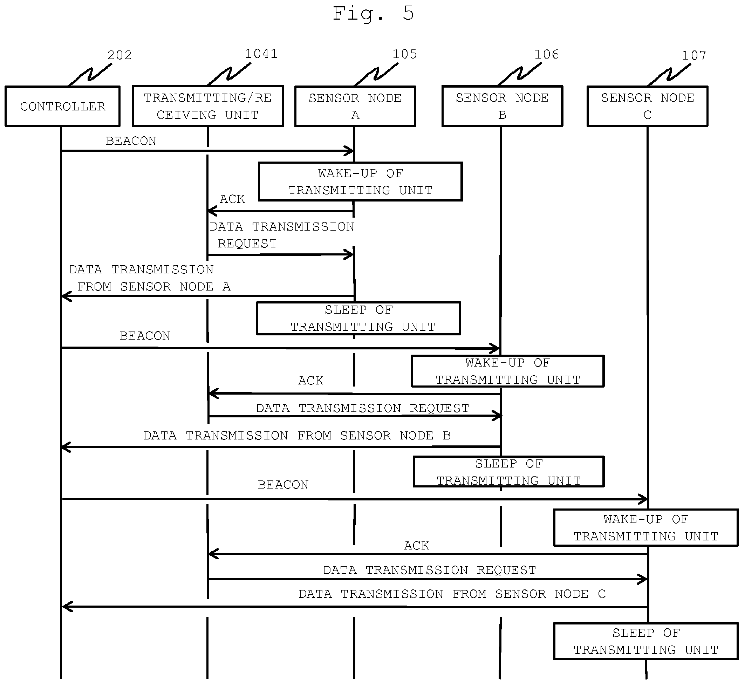

Fig. 5 is a diagram of a wireless communication sequence between the sink node 104 and the sensor nodes A 105 to C 107 when the blades of the wind power generation apparatus make one rotation. The wireless communication sequence will be described by citing Figs. 3 and 4.

The controller 202 connected to the sink node 104 transmits a beacon signal via the transmitting/receiving unit 1041 of the sink node 104. Although not illustrated in Fig. 5, the controller 202 continuously (or repeatedly) transmits the beacon signal until the transmitting/receiving unit 1041 receives an ACK signal from the sensor node A 105, which will be described later. The sensor node A 105 wakes up the transmitting/receiving unit 304 so as to output a transmitting wave when the SW1 is turned on by the control unit 305 according to the signal sensing the beacon signal from the receiving unit 303 (wake-up of the transmitting unit, and activation of the transmitting unit), and then instructs the transmitting unit 304 to transmit the ACK (a positive response to reception of the beacon signal). In addition, the controller 305 exclusively controls the SW2 and the SW3, as described above, to alternate the buffers P306 and Q307. By alternating the buffers, sensor data from the sensor unit 308 is stored into the buffer connected by the SW3.

In response to reception of the ACK from the sensor node A 105, the transmitting/receiving unit 1041 of the sink node 104 transmits a data transmission request to the sensor node A 105. The receiving unit 303 of the sensor node A 105 outputs the data transmission request to the control unit 305. In response to input of the data transmission request, the control unit 305 instructs the transmitting unit 304 to transmit the contents of the alternating buffer connected via the SW2 (sensor data). At completion of transmission of the contents of the buffer, the transmitting unit 304 notifies the control unit 305 of completion of transmission. In response to notification of completion of transmission, the control unit 305 turns off the SW1 so as to output no transmitting wave from the transmitting unit 304 (sleep of the transmitting unit, inactivation of the transmitting unit).

Further, the identifier of the sensor node A 105 is included into the sensor data, thus facilitating the process of the server 201 for collecting sensor data (the process for matching the sensor node A 105 to the sensor data). The sink node 104 transmits the beacon signal according to completion of reception of the sensor data from the sensor node A 105.

The sensor nodes B 106 and C 107 are operated in the same manner as the sensor node A 105 except that each of the sensor nodes B 106 and C 107 is operated based on the timing at which each of the sensor nodes B 106 and C 107 receives the beacon signal from the sink node 104, that is, the timing at which each of the sensor nodes B 106 and C 107 enters into the range of the half-power angle α of the antenna of the sink node 104 (that is, from -45° to +45°) when the maximum radiated electric power direction of the antenna of the sink node 104 is 0°.

According to this embodiment, it is possible to reduce occurrence of electric wave interference between a plurality of wireless communications between the sensor nodes on the blades of the wind power generation apparatus and the sink node in the nacelle thereof.

### Second Embodiment

In this embodiment, a plurality of sensor nodes are provided on each of the blades A 101 to C 103 of the wind power generation apparatus in the first embodiment. In the first embodiment, the sensor is a strain gauge, while in a second embodiment, the sensor may be a sensor node that measures a physical quantity and a chemical quantity, such as temperature, humidity, pressure, sound, acceleration, angular speed, the flow rate and the flow speed of a liquid and a gas, and a component to be analyzed. The wind power generation apparatus has a plurality of sensors of one of the above sensor types on each blade in order to monitor the state of the blade and the state around the blade. Here, wireless communication of such wind power generation apparatus between the sink node 104 and each of the sensor nodes A 105 to C 107 will be described.

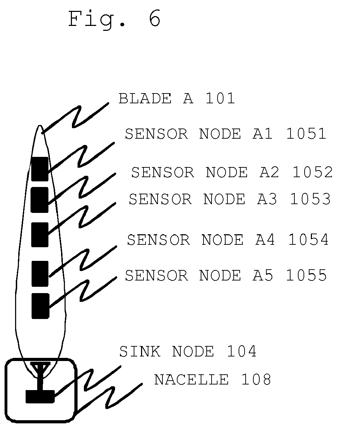

Fig. 6 is a configuration example of part of the wind power generation apparatus, that is, the sink node 104 in the nacelle 108 and the blade A 101 (the blades B 102 and C 103 are not illustrated). The blade A 101 has sensor nodes A1 1051 to A5 1055. This embodiment is thus different from the first embodiment in that the plurality of sensor nodes are provided on each blade. The sensor nodes A1 1051 to A5 1055 have different identifiers (IDs).

The timing at which each sensor node starts the sensor data transmitting/receiving operation may be controlled by either of methods (1) and (2). As illustrated, the number of sensor nodes is five.
(1) Start of the transmitting/receiving operation of each of the sensor nodes A1 1051 to A5 1055 is controlled based on the signal sensing the beacon, as with the first embodiment. The sink node 104 transmits the beacon signal to each of the sensor nodes A1 1051 to A5 1055, and then completes transmission of sensor data of each of the sensor nodes A1 1051 to A5 1055. A transmission/reception order of the sensor nodes may be determined so that the sink node 104 transmits the beacon signal to the first sensor node, and then transmits the transmission request of sensor data to the second sensor node or subsequent thereof. According to the ID of each of the sensor nodes A1 1051 to A5 1055 included in the transmission request, each of the sensor nodes A1 1051 to A5 1055 detects that the transmission request is transmitted to itself.
   Like the numerical value example described in the first embodiment, each of the sensor nodes A1 1051 to A5 1055 on the blade A 101 performs wireless communication within the range of the blade position from -45° to +45°(90°). Thus, the range of the blade position allowable for each of the sensor nodes A1 1051 to A5 1055 is 90°/5 = 18°. When the amount of sensor data is the same, the communication speed is required to be five times the first embodiment, as described in (2).
(2) Start of the transmitting/receiving operation of each of the sensor nodes A1 1051 to A5 1055 is differentiated by a predetermined time. In the numerical value example in the first embodiment, the communication time allowable for the sensor node on the blade A 101 is 250 ms. Thus, start of the transmitting/receiving operation of each of the sensor nodes A1 1051 to A5 1055 is differentiated by 250 ms/5 = 50 ms, so that the communication time allowable for each of the sensor nodes A1 1051 to A5 1055 is 50 ms. The communication speed is 320 kbps x 5 = 1600 kbps = 1.6 mbps, which is five times the numerical value example in the first embodiment. The timing at which the sink node 104 transmits the beacon signal may be differentiated by the predetermined time, and a transmission/reception order of the sensor nodes may be determined to delay, from the beacon signal detection time of the first sensor node, the transmission/reception start time of each of the remaining sensor nodes A1 1051 to A5 1055 by the predetermined time, according to the transmission/reception order of the sensor nodes. In this case, the first sensor node for transmission and reception starts transmission/reception in response to reception of the beacon signal, as with the first embodiment, and in response to reception of the beacon signal, the second sensor node or subsequent thereof activates the timer to which the predetermined delay time is set, to start transmission/reception after the elapse of the predetermined delay time.

In this embodiment, each sensor node performs wireless communication with the sink node in synchronization with the signal sensing the beacon signal. It is thus possible to reduce occurrence of electric wave interference between a plurality of wireless communications between the sensor nodes on the blades of the wind power generation apparatus and the sink node in the nacelle thereof.

Features, components and specific details of the structures of the above-described embodiments may be exchanged or combined to form further embodiments optimized for the respective application. As far as those modifications are readily apparent for an expert skilled in the art they shall be disclosed implicitly by the above description without specifying explicitly every possible combination, for the sake of conciseness of the present description.

## Claims

1. A wind power generation apparatus comprising:
a nacelle (108) having a first antenna with a first radiation pattern, and a sink node (104) including a first transmitting/receiving unit (1041) transmitting a beacon via the first antenna and receiving first sensor data and second sensor data via the first antenna;
a first blade (101) having a first sensor node including a second transmitting/receiving unit transmitting the first sensor data via a second antenna in response to reception of the beacon via the second antenna and rotated by a rotor (110) connected to the nacelle (108); and
a second blade (102) having a second sensor node including a third transmitting/receiving unit transmitting the second sensor data via a third antenna in response to reception of the beacon via the third antenna and rotated by the rotor (110),
wherein one of the second antenna and the third antenna is located within the range of a predetermined angle less than a half-power angle of the first radiation pattern, and the other is located outside the range of the half-power angle.

2. The wind power generation apparatus according to claim 1,
wherein the first sensor node activates a first transmitting unit included in the second transmitting/receiving unit in response to reception of the beacon, and
wherein the second sensor node activates a second transmitting unit included in the third transmitting/receiving unit in response to reception of the beacon.

3. The wind power generation apparatus according to claim 2,
wherein the first sensor node and the second sensor node respectively inactivate the first transmitting unit (1041) and the second transmitting unit in response to completion of transmission of the sensor data within the range of the predetermined angle.

4. The wind power generation apparatus according to claim 3,
wherein the first blade (101) has a plurality of the first sensor nodes, the first sensor nodes completing transmission of the first sensor data within the range of the second antenna at the predetermined angle of the first radiation pattern according to a predetermined transmission order of the first sensor nodes, and
wherein the second blade (102) has a plurality of the second sensor nodes, the second sensor nodes completing transmission of the second sensor data within the range of the third antenna at the predetermined angle of the first radiation pattern according to a predetermined transmission order of the second sensor nodes.

5. The wind power generation apparatus according to claim 4,
wherein the first sensor nodes transmit the first sensor data in synchronization with rotation time obtained by equally dividing rotation time of the first blade (101) at the predetermined angle by the number of the first sensor nodes, and
wherein the second sensor nodes transmit the second sensor data in synchronization with rotation time obtained by equally dividing rotation time of the second blade at the predetermined angle by the number of the second sensor nodes.

6. A wireless communication method between a sink node (104) and a first sensor node and a second sensor node in a wind power generation apparatus having a nacelle (108) having the sink node (104) connected to a first antenna with a first radiation pattern, a first blade (101) having the first sensor node connected to a second antenna and rotated by a rotor (110) connected to the nacelle (108), and a second blade (102) having the second sensor node connected to a third antenna and rotated by the rotor connected to the nacelle (108),
wherein the sink node transmits a beacon via the first antenna,
wherein the third antenna is located outside the range of a half-power angle of the first radiation pattern, the second antenna is located within the range of a predetermined angle less than the half-power angle of the first radiation pattern, and the first sensor node connected to the second antenna transmits first sensor data via the second antenna in response to reception of the beacon via the second antenna,
wherein the second antenna is located outside the range of the half-power angle of the first radiation pattern, the third antenna is located within the range of the predetermined angle less than the half-power angle of the first radiation pattern, and the second sensor node connected to the third antenna transmits second sensor data via the third antenna in response to reception of the beacon via the third antenna, and
wherein the sink node (104) receives the first sensor data and the second sensor data via the first antenna.

7. The wireless communication method in a power generation apparatus according to claim 6,
wherein, in the apparatus, the first sensor node activates a first transmitting unit transmitting the first sensor data in response to reception of the beacon, and
wherein, in the apparatus, the second sensor node activates a second transmitting unit transmitting the second sensor data in response to reception of the beacon.

8. The wireless communication method in a power generation apparatus according to claim 7,
wherein, in the apparatus, the first sensor node and the second sensor node respectively inactivate the first transmitting unit and the second transmitting unit in response to completion of transmission of the sensor data within the range of the predetermined angle.

9. The wireless communication method in a power generation apparatus according to claim 8,
wherein, in the apparatus, the first blade has a plurality of the first sensor nodes, the first sensor nodes completing transmission of the first sensor data within the range of the second antenna at the predetermined angle of the first radiation pattern according to a predetermined transmission order of the first sensor nodes, and
wherein, in the apparatus, the second blade has a plurality of the second sensor nodes, the second sensor nodes completing transmission of the second sensor data within the range of the third antenna at the predetermined angle of the first radiation pattern according to a predetermined transmission order of the second sensor nodes.

10. The wireless communication method in a power generation apparatus according to claim 9,
wherein, in the apparatus, the first sensor nodes transmit the first sensor data in synchronization with rotation time obtained by equally dividing rotation time of the first blade at the predetermined angle by the number of the first sensor nodes, and
wherein, in the apparatus, the second sensor nodes transmit the second sensor data in synchronization with rotation time obtained by equally dividing rotation time of the second blade at the predetermined angle by the number of the second sensor nodes.
